# EUROPEAN PATENT APPLICATION

(11) **EP 2 179 843 A1**
(43) Date of publication of application: **28.04.2010**
(21) Application number: 08380302.3
(22) Date of filing: 24.10.2008
(51) Int. Cl.: B32B 27/10, D21H 19/00, G09F 3/00

(54) **Laminated support for self-adhesive materials**

(71) Applicant: Grup Andreu Gombau, S.L., 17457 Riudellots de la Selva, Gerona (ES)
(72) Inventor: Andreu Gombau, Gual, 17457 Riudellots de la Selva, Girona (ES)
(74) Representative: Pons Ariño, Angel

(57) **Abstract**

The laminated support for self-adhesive materials disclosed in this invention is especially indicated for the manufacturing of labels, as it uses laminated paper and film in its constitution improving the grip and preventing stretching of materials during its processing in the printing and processing in machines of semi-rotary and of transfer type due to the lack of traction of the support.

## Description

### OBJECT OF THE INVENTION

The main object of the present invention is a laminated support intended for the constitution of multilayer, self-adhesive materials and their main, but not exclusive, applications in the sector of self-adhesive label manufacturing.

### BACKGROUND OF THE INVENTION

There can currently be found many multilayer materials with very different applications, such as for example the multilayer material of milk containers known as TetraBrick® of Tetra Pack which are composed of three different materials disposed in several laminated layers which form a single material. These materials are: cardboard (from virgin cellulose), polyethylene (PE) polymer material and aluminium AI. Said materials are disposed in 5 superimposed sheets: 3 of polyethylene PE, 1 of aluminium and 1 of high quality Kraft paper. This example is only a small part of the world of multilayer materials.

A large part of this type of materials incorporates one or several layers of adhesive material, either to join the layers of different materials, for which lamination adhesive is used, or to confer the characteristic of self-adhesive material upon the material, in which case an adhesive sensitive to pressure is incorporated.

Nowadays, many products of this type can be found, self-adhesive or materials which incorporate adhesives sensitive to pressure and/or lamination adhesives, and products which use one or several materials of this type such as, for example, the previously known double-sided adhesive tape, or underground train tickets or aeroplane tickets.

A large number of combinations of self-adhesive materials for the manufacturing of labels can be found on the market, basically two drawbacks can be found when working with self-adhesive materials:
- Super transparent labels, of the "clear on clear" type, wherein the use of a siliconated support of polymeric nature is necessary.
- Another type of label during whose manufacturing transformation problems are suffered in the label manufacturing machines due to the nature of the self-adhesive material; such as the little resistance to traction, insufficient grip in the advancement stage and other similar characteristics created by the same aforementioned problem.

We must also point out the possibility of the machine not allowing a suitable finish for the labels when working with certain materials.

The manufacturing process for self-adhesive labels which use semi-rotary or transfer machines can produce a loss of printing register due to an insufficient grip of the material with the rollers and other parts of the machine during the advancement of the material when materials are transformed where both the front as well as the support are of polymeric nature, such as in the case of Films; this stretching of the material is produced by the work stress applied by the machines.

Some of these products and their manufacturing are disclosed in document JP59166576 where the formation of a multilayer, self-adhesive material is described by means of the application of a layer of a silicone-based compound on a laminated material and an adhesive compound which finally is submitted to radiation for its end finish is subsequently applied to the final layer.

Wine labelling systems are **characterized in that** they require great precision in the placement of the label, as said label bears all of the information relating thereto; and is furthermore the bearer of the brand.

The systems mentioned above require a high quality label and normally these labels are created in semi-rotary or transfer machines of the type. By means of the use of supports known to date errors can be produced during the processing of the labels in the machines due to the losses of traction or excessive stretching of the materials used, leaving as a result useless labels for this type of market which requires a high level of quality and finish. On the other hand, the errors produced in the printing of labels due to the aforementioned problem of mistakes in the gripping of the material, also render the end product useless.

First, it must be mentioned that a multilayer, self-adhesive material responds to the configuration of a succession of layers joined to each other which form a single laminated material which can be processed as a material constituted by a single laminate, which is basically comprised of:
- A frontal material (1) which can be of very different natures, such as paper or PE, OPP, BOPP, PET, PS, PVC, acetate, etc. film
- A self-adhesive layer (2) in direct contact with the frontal material
- A layer of silicone (3)
- A self-adhesive support (4) which is in contact with the adhesive layer, whose function is to protect said layer, prevent the adhesion before the moment planned for its use and transport the labels during the automatic application phase.

### DESCRIPTION OF THE INVENTION

The main object of the invention corresponds to a laminated support for self-adhesive products intended mainly, but not exclusively, for the manufacturing of labels.

The support object of the description provides a novel solution to all these drawbacks by combining film and paper joined by a layer of lamination material; thus a combination of the advantages is achieved, each which confers upon the paper mechanical characteristics which offer a better grip and prevents stretching, and also the advantages which confer upon the film transparency and also prevents registration problems.

In accordance with the combination described of film plus paper, solutions are provided to the drawbacks and limitations which affect the manufacturing of self-adhesive labels which currently have no answer in the state of the art.

As has been described in the previous paragraph, the label manufacturing process can suffer from stretching and register loss problems.

The support defined with the combination described resolves the printing problems, register loss, particularly in semi-rotary and transfer machines, produced by a slippage of the material in the path of the machine.

The support object of the description in turn resolves the problems related to the low mechanical resistance of the film supports as base of self-adhesive materials for their transformation in labels and for their automatic application.

### DESCRIPTION OF THE DRAWINGS

In order to complement the description being made and with the purpose of helping towards a better understanding of the characteristics of the invention, in accordance with a preferred example of practical embodiment thereof, a set of drawings is attached as an integral part of said description, wherein the following has been represented, in an illustrative and non-limitative character:
Figure 1 shows a schematic representation of the state of the art.
Figure 2 shows a close-up side view of a multilayer, self-adhesive material with the support which comprises laminated paper and film.

### PREFERRED EMBODIMENT OF THE INVENTION

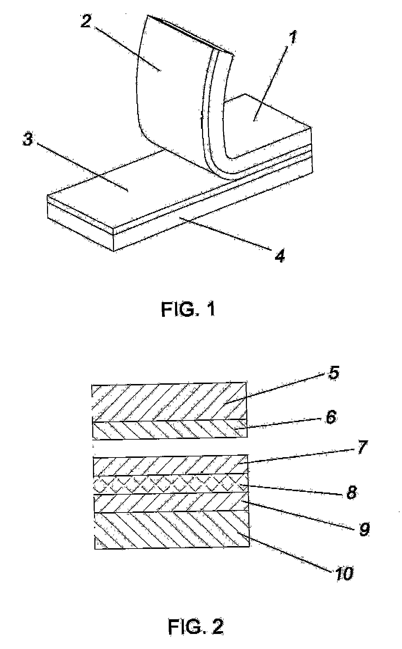

As can be observed in fig. 1, self-adhesive labels currently comprise an non-stick support (4) which is manufactured from a single material, whether it is paper or by using film.

The use of this type of laminated supports for the manufacturing of labels can find justification in labels of high added value such as labels for the oenological, pharmaceutical, nutritional markets or any other application which requires a high speed application of the labels.

In this type of markets wherein the label is a key element, the support described above can be used as a support in any type of self-adhesive label of continuous application.

Given that it is not a standard material, it is not a type of support which can be suitable for any industry. That is why this example of application is aimed at the market of labelling bottles of wine, oenological labels, where a high level of quality in the printing and finish and, in turn, a perfect adhesion and consistency in the label, is necessary.

As can be observed in Figure 2 laminated support for self-adhesive materials which constitutes the object of this invention and film which is comprised by a layer of paper (10) and a layer of film (8) joined by a layer of lamination material (9), a perfect finish is achieved and the problems described are prevented which bring to production labels which do not comply with the premises for an oenological label. i.e. the combination of a layer of paper (10) and a layer of film (8) joined by a layer of lamination material (9), confers upon the support the specific characteristics of both materials combined in a single product; providing the window label with excellent transparency necessary for the labelling when a frontal (5) is used constituted by a transparent film, normally provided when film supports are used, and at the same time with the grip necessary for its processing, preventing the printing and register loss problems produced by slippage of the material described in the previous paragraph.

All of this achieves a high mechanical resistance and an excellent gripping of the support, which is achieved by combining both materials.

A label is observed in figure 2 configured by a support which comprises a layer of paper (10) and a layer of film (8) joined by a layer of lamination material (9) forming the support, this can be covered by a layer of silicone (7). This support is complemented by the frontal (5) and the adhesive layer (6) to constitute the complete self-adhesive label for the labelling of wines.

## Claims

1. Laminated support for self-adhesive materials **characterized in that** it comprises a layer of paper (10) and a layer of film (8) joined to each other by means of a layer of lamination material (9).

2. Laminated support for self-adhesive materials according to claim 1, **characterized in that** the paper of the layer of paper (10) is of the high-transparency glazed type.

3. Laminated support for self-adhesive materials according to claim 1, **characterized in that** the layer of film (8) is of polymeric composition.
